# EUROPÄISCHE PATENTSCHRIFT

(11) **EP 3 124 084 B1**
(45) Veröffentlichungstag und Bekanntmachung des Hinweises auf die Patenterteilung: **13.11.2019**
(21) Anmeldenummer: 16175703.4
(22) Anmeldetag: 22.06.2016
(51) Int. Cl.: A62C 37/14, H01H 37/76, F16K 17/38

(54) **THERMISCHES AUSLÖSEELEMENT**
THERMAL RELEASE ELEMENT
ÉLEMENT DE DECLENCHEMENT THERMIQUE

(30) Priorität: 28.07.2015 DE 202015103950 U
(43) Veröffentlichungstag der Anmeldung: 01.02.2017
(73) Patentinhaber: Job Lizenz GmbH & Co. KG, 22926 Ahrensburg (DE)
(72) Erfinder: Klug, Rüdiger, 22926 Ahrensburg (DE); Müller, Bodo, 25436 Tomesch (DE); Teschner, Jürgen, 22339 Hamburg (DE)
(74) Vertreter: Raffay & Fleck

(56) Entgegenhaltungen:
- DE-U1-202013 102 312
- GB-A- 251 119
- US-A- 4 796 710

## Beschreibung

Die Erfindung betrifft ein thermisches Auslöseelement.

Thermische Auslöseelemente sind seit langem bekannt und gebräuchlich. Sie werden insbesondere und in großer Zahl in Sprinkler- und Feuerlöschanlagen eingesetzt, wo sie an mit einem unter Druck stehenden Löschmittel (in der Regel Wasser) gefüllte Rohrleitungen angeschlossenen Austrittsdüsen bzw. Sprinkleraustritte, diese in ihrer verschlossenen Stellung haltend, zwischen einem Widerlager und einem Verschlusselement angeordnet sind. Übersteigt die äußere Temperatur die durch entsprechende und bekannte technologische Maßnahmen einzustellende Auslösetemperatur wird durch den von der Auslöseflüssigkeit aufgebauten, mit Temperaturerhöhung steigenden Druck das Berstmaterial der Außenwand zerstört, zerbricht das Auslöseelement und gibt den Weg zum Öffnen des Verschlusselementes frei, so dass das Löschmittel aus den Sprinklerdüsen bzw. Sprinkleraustritten austreten und abgegeben werden kann.

Neben einer Anwendung in solchen Sprinkler- bzw. Feuerlöschanlagen sind auch Anwendungen bekannt und beschrieben, bei denen solche Auslöseelemente Druckentlastungsöffnungen verschließen, um diese bei einer eine kritische Temperatur übersteigenden Auslösetemperatur freizugeben, z.B. um Druckgasbehälter in Brandfällen rechtzeitig zu entleeren, bevor diese etwa explodieren können. Auch sind Anwendungen derartiger Auslöseelemente im Zusammenhang mit der Unterbrechung elektrischen Stromflusses bekannt. Weitere Anwendungen sind denkbar; solche Auslöseelemente können immer dann zum Einsatz kommen, wenn temperatursensitiv mechanische Schaltstellungen zu verändern oder aber elektrische Leitungen zu unterbrechen sind.

Die typischen bekannten thermischen Auslöseelemente der eingangs genannten Art, die seit vielen Jahren bekannt sind und von denen eines z.B. in der DE 36 01 203 A1 gezeigt und beschrieben ist, hatten und haben in dem rohrförmigen mittleren Abschnitt in einer quer, insbesondere senkrecht, zu der axialen Erstreckung dieses Auslöseelementes genommenen Schnittebene stets eine kreisrunde oder aber eine ausgehend von einer kreisrunden Zielform aufgrund von Toleranzabweichungen leicht ovalisierte Querschnittsform. Diese Querschnittsform gilt dabei sowohl für die Außenkontur der Außenwand als auch für deren Innenkontur, die an einen innen liegenden Hohlraum angrenzt. Denn in der Herstellung wurde und wird ein rohrförmiges Ausgangsmaterial eingesetzt, welches zunächst an einem ersten stirnseitigen Ende zur Bildung des kappenartig verschlossenen Endabschnittes entsprechend verschlossen wird, z.B. durch thermisches Umformen, bei dem dann der innenliegende Hohlraum mit der Auslöseflüssigkeit befüllt wird und bei dem im Anschluss an dem zweiten stirnseitigen Ende der zweite kappenartige Abschluss und Endabschnitt gebildet wird, z.B. durch erneutes thermisches Umformen. Das rohrförmige Ausgangsmaterial, auf welches hier zurückgegriffen wird, war und ist stets ein Rohr mit nominell kreisförmigem Querschnitt, wobei die kreisförmige Querschnittskontur sowohl die Außenseite der Wandung als auch die zum innenliegenden Rohrbereich bzw. Rohrabschnitt gelegene Innenkontur der Außenwandung betrifft. Lediglich aufgrund möglicher Fertigungstoleranzen waren die Abweichungen von der idealen Kreisform möglich und kamen vor, die zu einer leichten Ovalisierung dieser Kontur führten.

Zur Erfüllung einer wesentliche Anforderung an solchermaßen gebildete thermische Auslöseelemente, die sich aus der typischen Einbausituation in der Verwendung insbesondere zum Geschlossen- oder Offenhalten einer mechanischen Schaltposition von hierbei beteiligten Elementen ergibt, nämlich das zuverlässige Aushalten einer in Richtung einer entgegengesetzten Schaltstellung der mechanischen Elemente gerichtete Kraft, die auf dem thermischen Auslöseelement in dessen axialer Richtung lastet, ist in der DE 20 2013 102 312 U1 bereits vorgeschlagen worden, bei einem solchen Auslöseelement einen Gefäßkörper so auszubilden, dass dieser in einem rohrförmigen mittleren Abschnitt in einer quer, insbesondere senkrecht, zu der axialen Richtung genommenen Schnittebene eine Außenkontur der Außenwand und/oder eine an einen im Innern des Gefäßkörpers liegenden Hohlraum angrenzende Innenkontur der Außenwand aufweist, die von einer kreisförmigen oder ovalen Kontur abweicht. Auslöseelemente mit von einer Kreis- oder Ovalform abweichenden Außenkontur sind auch bereits aus der US 4,609,047, der US 4,739,835 und der US 1,733,701 bekannt. Während gemäß den US 4,609,047 und der US 4,739,835 mit der besonderen Formgebung der Auslöseelemente ein verbessertes Ansprechverhalten (insbesondere eine schnellere Auslösezeit) erreicht werden soll, ist die in der US 1,733,701 beschriebene Aufbringung von Rippen als einem verbesserten Brechen (einem angestrebten Zerspringen in viele kleine Splitter anstelle einer zu verhindernden Ausbildung lediglich eines Längsrisses) dienend beschrieben.

Weitere bekannte thermische Auslöseelemente werden in US 4,796,710 und GB 251,119 offenbart.

Ein weiteres, bisher nicht adressiertes Problem gerade der schnell ansprechenden thermischen Auslöseelemente, die für eine kurze Reaktionszeit mit einem sehr dünnwandigen Gefäßkörper gebildet sind, besteht in einer für diese Elemente gegebenen spürbaren Empfindlichkeit gegenüber Querkräften. Solche Kräfte treten zum Beispiel auf, wenn versehentlich Schläge oder Stöße seitlich auf die thermischen Auslöseelemente ausgeübt werden, zum Beispiel durch eine unbeabsichtigte Kollision mit einem durch den Raum getragen Gegenstand oder dergleichen. Eine ideale Zielvorstellung ist hierbei, dass ein thermisches Auslöseelement gegen derartige Querkräfte so weit als möglich unempfindlich ist, ohne dabei aber sein unmittelbares Ansprechverhalten und die kurze Reaktionszeit auf Temperaturerhöhungen in der Umgebung zu verlieren.

Der Lösung dieser Aufgabe widmet sich die vorliegende Erfindung. Diese Aufgabe wird dabei gelöst durch ein thermisches Auslöseelement mit den Merkmalen des Anspruchs 1. Vorteilhafte Weiterbildungen sind in den Ansprüchen 2 bis 15 enthalten.

Im Zuge ausgedehnter Analysen und angestellter Simulationen wurde im Rahmen der Erfindung erkannt, dass eine auf der Außenseite des thermischen Auslöseelement in einem mittleren Abschnitt liegende Querschnittskontur, die von einer Kreis- oder Ovalform abweicht, dann für eine wesentliche Verbesserung der Widerstandsfähigkeit gegenüber Querkräften (eine Reduzierung der Empfindlichkeit gegenüber derartigen Kräften) sorgt, wenn Übergangsbereiche vorgesehen sind, in denen die von der Kreis- oder Ovalform abweichende Querschnittskontur im mittleren Abschnitt zu einer kreis- oder ovalförmigen Querschnittskontur in dem angrenzenden Entartung überführt wird und diese Übergangsbereiche eine Längserstreckung in der axialen Richtung der Ausdehnung des Gefäßkörpers von mindestens 1,5 mm aufweisen. Durch diese Maßnahme wird eine sanfte Überleitung gewährleistet, die, dies haben die Ergebnisse der Analysen gezeigt, die deutliche Verbesserung der Widerstandsfähigkeit gegenüber Querkräften erbringt. Die Reaktionszeit und das Auslöseverhalten eines solchen thermischen Auslöseelements bleiben dabei in unveränderter Weise mit sehr guten Werten und Eigenschaften erhalten, da die Wandstärken des Gefäßkörpers entsprechend gering beibehalten werden können.

In diesen Übergangsbereichen findet entsprechend bevorzugt ein gleitender und stetiger Übergang der Querschnittsform im mittleren Abschnitt zu der Querschnittsform im jeweils angrenzenden Endabschnitt statt. Mit Vorteil können die Übergangsbereiche jeweils eine Längserstreckung in der axialen Richtung von 1,5 mm bis zu 3,0 mm aufweisen. Es hat sich nämlich herausgestellt, dass länger ausgestaltete Übergangsbereiche wiederum nachteilig sind, insbesondere da sie einen entsprechend verkürzten mittleren Abschnitt bedingen, der dann wiederum nicht ausreichend gefestigt ist, um die angestrebte Robustheit gegenüber Querkräften zu erzielen. Insbesondere können die Längserstreckungen der Übergangsbereich in der axialen Richtung von 2,0 bis 2,5 mm, vorzugsweise von 2,0 bis 2,2 mm betragen.

Eine mögliche Konturgebung, die sich im Rahmen der Entwicklung als günstig und positiv erwiesen hat, ist in einer Kontur von polygonaler Form zu sehen. Dabei wird eine polygonale Form insbesondere die Form eines regelmäßigen Vieleckes oder aber eine Sternform, die insbesondere auch regelmäßig gebildet sein kann, aufweisen. Hier haben sich insbesondere im Hinblick auf eine Form eines regelmäßigen Vielecks, aber auch für die Sternform, solche polygonalen Formen als besonders günstig bewährt, die in der Anzahl der geraden Linienzüge, die aneinandergereiht sind, nicht zu hoch liegen. Wird das Polygon, insbesondere ein regelmäßiges Vieleck, zu kleinteilig, d.h. sind zu viele gerade geführten Linienabschnitte aneinander gereiht, so nähert sich nämlich die Querschnittskontur wiederum einer Kreisform an, so dass der Vorteil der von dieser Kreisform abweichenden Kontur erodiert. Es haben hier für regelmäßige Vielecke insbesondere polygonale Außenkonturen mit geraden Linienabschnitten in einer Anzahl von maximal 12 oder weniger, insbesondere in einer einstelligen Anzahl als besonders geeignet für die bei entsprechenden thermischen Auslöseelementen verwendeten Rohrdurchmesser von wenigen Millimetern erwiesen. Natürlich können aber auch bei regelmäßigen Vielecken polygonale Außenkonturen mit einer höheren Anzahl von gerade verlaufenden Linienabschnitten gewählt werden, solange nicht eine Kreisform angenähert wird.

Alternativ sind aber auch Realisierungen als besonders günstig erkannt worden, bei denen die von der Kreisform abweichende Außenkontur in einer Art Grundform die Form einer Kreisform oder Ovalform aufweist mit daran angesetzten bzw. daran ausgebildeten Ausbuchten, d.h. aus dem Linienverlauf der Kreis- bzw. Ovalform ausbrechenden Linienverlaufsabschnitten. Solche Querschnitte können beispielsweise blütenförmig gebildet sein.

Einen solchen Querschnitt kann man insbesondere dadurch erhalten, dass der Gefäßkörper zumindest in seinem mittleren, rohrförmigen Abschnitt auf eine Außenseite der Außenwand aufgebrachte, mit dieser fest verbundene Verstärkungsbereiche aufweist. Dies können z.B. Verstärkungsleisten massiver Art sein. In diesem Zusammenhang bedeutet "auf die Außenseite bzw. die Innenseite aufgebracht" nicht etwa zwingend, dass hier nachträglich aufgebrachtes Material vorhanden sein muss. Ebenso gut kann bereits bei der Herstellung des rohrförmigen mittleren Abschnittes eine entsprechende Formgebung vorgesehen sein. Das Wort "aufgebracht" bedeutet hier also lediglich, dass im Vergleich zu einer Kreis- oder Ovalform an bestimmten Abschnitten zusätzliches Material vorhanden ist, welches im Querschnitt die genannten Ausbuchtungen hinzufügt. Grundsätzlich können sich die Verstärkungsbereiche auch spiralförmig oder in anderer Weise auf einem parallel zu der axialen Erstreckung ausgerichteten Verlauf unterscheidend gebildet sein.

Das erfindungsgemäße thermische Auslöseelement kann dabei insbesondere über die gesamte axialer Erstreckung bestimmt eine Länge von 12 bis 50 mm aufweisen, typisch sind Längen von 15 bis 25 mm.

Insbesondere und mit besonderem Vorteil ist das Berstmaterial, aus dem die Außenwand des thermischen Auslöseelementes besteht, Glas. Glas bringt hier sehr vielfältige Vorteile mit sich. Zum einen ist Glas in hohem Maße inert, was einer langen Standzeit des thermischen Auslöseelementes auch in Umgebungen mit aggressiver Atmosphäre zuträglich ist. Ferner ist Glas transparent und erlaubt eine Inaugenscheinnahme des im Innern liegenden Innenraumes, der mit der Auslöseflüssigkeit, die insbesondere eingefärbt sein kann, befüllt ist. Dies ist beispielsweise bereits bei der Herstellung im Rahmen der Qualitätskontrolle von besonderem Vorteil. Darüber hinaus ist Glas ein an sich sprödes Material, welches im Auslösefalle kleinteilig zerbricht und damit einen sicheren Schaltvorgang des nach Auslösen des thermischen Auslöseelementes durchzuführenden mechanischen Schaltweges gewährleistet. Ferner kann Glas technologisch sehr gut beeinflusst werden hinsichtlich seiner Brucheigenschaften und sonstiger mechanischer Eigenschaften. Schließlich ist es für eine Verarbeitung auf dem Wege zur Herstellung der erfindungsgemäßen thermischen Auslöseelemente besonders gut geeignet, lässt sich insbesondere hervorragend durch Wärmebehandlung umformen, z.B. um die endseitigen Abschlüsse (die kappenartigen Verschlussenden) auszubilden.

Für ein schnelles Ansprechen des thermischen Auslöseelements ist die Wandstärke des Gefäßkörpers mit Vorteil jedenfalls in dem mittleren Abschnitt und dort zumindest in ausgewählten Bereichen ≤ 0,5 mm.

In dem Hohlraum ist mit Vorteil zusätzlich zu der Auslöseflüssigkeit eine Gasblase angeordnet. Dieses Vorsehen einer Gasblase ermöglicht einen zuverlässigen Druckaufbau im Inneren des Hohlraumes bei steigender Temperatur und damit ein zuverlässiges und temperaturgenaues Auslösen des thermischen Auslöseelementes bei der gewählten Auslösetemperatur.

Hergestellt werden kann das Auslöseelement nach der Erfindung insbesondere indem zunächst ein rohrförmiges Ausgangswerkstück aus dem Berstmaterial, welches in einer quer, insbesondere senkrecht, zu einer axialen Richtung des Ausgangswerkstückes genommenen Schnittebene eine Außenkontur seiner Außenwand aufweist, die von einer kreisförmigen oder ovalen Kontur abweicht, in einem ersten Schritt an einem ersten Stirnende einseitig verschlossen wird, um so ein Halbzeug zu erhalten. Der in diesem Halbzeug befindliche Hohlraum, der einseitig verschlossene Innenraum des rohrförmigen Ausgangswerkstückes, wird dann in einem nächsten Schritt mit der Auslöseflüssigkeit befüllt. Das Halbzeug wird anschließend an dem dem ersten Stirnende gegenüberliegenden zweiten Stirnende verschlossen. Dabei kann insbesondere das Befüllen des Halbzeuges mit der Auslöseflüssigkeit so geschehen, dass nach dem Verschließen eine Gasblase in dem dann allseitig abgeschlossenen Hohlraum des Auslöseelementes verbleibt. Dabei ist darauf zu achten, dass die Übergangsbereiche entsprechend sanft und fließend ausgebildet werden mit den o.g. Werten für deren axiale Erstreckung.

Weitere Vorteile und Merkmale der Erfindung ergeben sich aus der nachfolgenden Beschreibung von Ausführungsbeispielen anhand der beigefügten Figuren. Dabei zeigen:
- Fig. 1: in einer schematischen Querschnittsdarstellung ein thermischen Auslöseelement gemäß der Erfindung in einem Längsschnitt;
- Fig. 2: die Querschnittskontur eines mittleren Abschnittes des in Fig. 1 gezeigten thermischen Auslöseelementes;
- Fig. 3: in drei verschiedenen Ansichten a, b, c unterschiedliche Querschnittskonturen des mittleren Abschnittes eines erfindungsgemäßen thermischen Auslöseelementes mit sternförmiger Außenkontur der Außenwand;
- Fig. 4: eine Querschnittsdarstellung des mittleren Bereiches eines erfindungsgemäßen thermischen Auslöseelementes mit Konturen in der Form eines regelmäßigen Vieleckes; und
- Fig. 5: in drei Darstellungen a-c unterschiedliche Gestaltungsvarianten von Querschnitten im mittleren Bereich eines erfindungsgemäßen thermischen Auslöseelementes, bei denen die Querschnitte in einer Grundform kreisförmig sind mit daran angeordneten Ausbuchtungen.

Die Figuren zeigen bloß schematische Darstellungen, die der Erläuterung der Erfindung dienen, und sind keineswegs maßstabsgerecht.

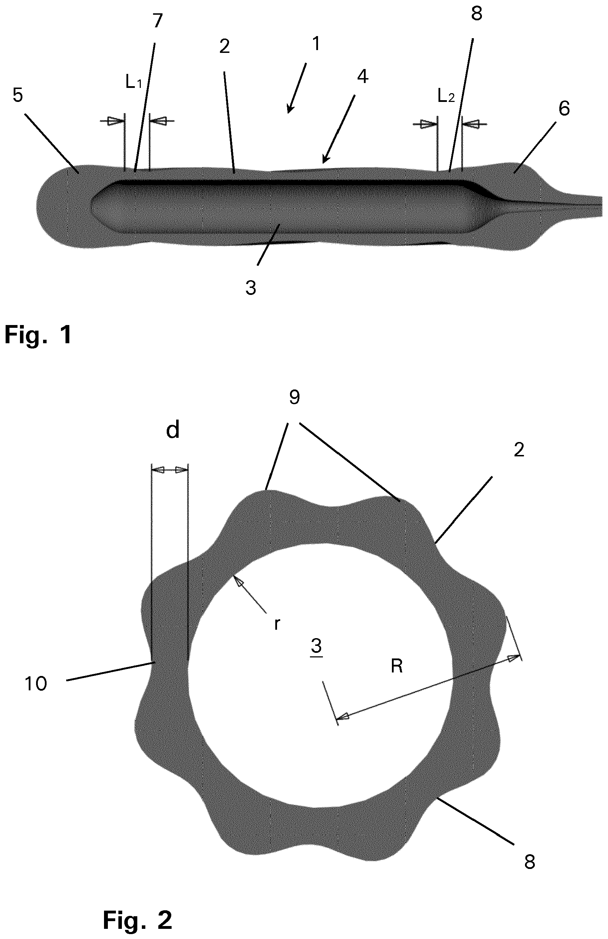

In Fig. 1 ist schematisch eine Längsschnittdarstellung eines erfindungsgemäßen thermischen Auslöseelements 1 gezeigt. Dieses thermische Auslöseelement 1 hat einen allseits mit einer Außenwand 2 umschlossenen Gefäßkörper, in dessen Innern ein innenliegender Hohlraum 3 ausgebildet ist. Der Gefäßkörper unterteilt sich in einen mittleren Abschnitt 4, der rohrförmig gebildet ist und langgestreckt in einer axialen Richtung verläuft, sowie zwei an den jeweiligen axialen Enden des mittleren Abschnittes 4 ausgebildeten Endabschnitten 5, 6, in denen der Hohlraum 3 kappenartig verschlossen ist. Im Inneren des Hohlraumes 3 ist, hier nicht dargestellt, eine Auslöseflüssigkeit angeordnet und befindet sich zudem eine Gasblase. Zwischen dem mittleren Abschnitt 4 und dem Endabschnitt 5 liegt ein Übergangsbereich 8. Ein weiterer Übergangsbereich liegt zwischen dem mittleren Abschnitt 4 und dem Endabschnitt 6. Der Übergangsbereich 7 hat eine axiale Längserstreckung Li, und der Übergangsbereich 8 hat eine axiale Längserstreckung L₂. Die Außenwand 2 des thermischen Auslöseelements 1 ist aus einem Berstmaterial, hier insbesondere Glas, gefertigt. Das thermische Auslöseelement 1 hat dabei eine Gesamtlänge von ca. 12 bis 50 mm.

Liegt in der Umgebung der Außenwand 2 eine erhöhte Temperatur an, die bewirkt, dass die Auslöseflüssigkeit im Inneren des Hohlraums 3 einen ausreichend hohen Druck zum Sprengen der aus dem Berstmaterial bestehenden Außenwand 2 erzeugen lässt, bricht das thermische Auslöseelement 1 in bekannter Weise ein, gibt damit z.B. einen Abstand zwischen Widerlagern, zwischen denen es angeordnet ist, frei. Im Falle einer Sprinkleranlage kann dann das Verschlusselement der Sprinklerdüse dem anstehenden Druck der Sprinklerflüssigkeit ausweichen, die Düse öffnet. Im Falle eines Druckablassventils für z.B. einen unter Druck stehenden Gasbehälter, öffnet dieses Ventil, Gas kann aus dem Behälter kontrolliert ausströmen.

In dem mittleren Abschnitt 4 ist in bei dem thermischen Auslöseelement 1 in Fig. 1, wie in Fig. 2 gezeigt, die Gefäßwand in ihrer Außenkontor mit einem von einer Kreis- und auch von einer Ovalform abweichenden Querschnitt gebildet. Hier sind Rippen 9 und dazwischen liegende Täler 10 ausgebildet. Der im Querschnitt von einer kreisförmigen Kontur begrenzte Hohlraum 3 hat einen Radius r. Mit R ist ein Radius eines Umkreises bezeichnet, der die äußersten Punkte der Rippen 9 umgibt. In den Sohlen der Täler 10 ist in dem mittleren Abschnitt die Wand des Gefäßkörpers 2 mit der geringsten Wandstärke d ausgebildet, sie beträgt dort mit Vorteil 0,3 mm oder weniger.

In dem in Figuren 1 und 2 gezeigten Ausführungsbeispiel sind insgesamt acht Rippen 9 im mittleren Abschnitt vorgesehen. Diese sind, wie Fig. 1 erkennen lässt spiralförmig um die Längsachse des thermischen Auslöseelements 1 gewunden. In den Übergangsbereichen 7, 8 wird die Querschnittskontur von der von einer Kreis- und auch einer Ovalform abweichenden Form sanft überführt in eine kreisförmige Querschnittskontur in den sich jeweils anschließenden Endabschnitte 5, 6. Dieses sanfte und kontinuierliche Überführen der Querschnittskontur geschieht über die jeweilige Länge L₁, bzw. L₂. Diese Längen L₁, L₂ betragen jeweils mindestens 1,5 mm, sind vorzugsweise höchstens mit 3 mm bemessen. Mit besonderem Vorteil liegen sie von 2,0 bis 2,5 mm, insbesondere von 2,0 bis 2,2 mm. Die Längen L₁, L₂ können grundsätzlich unterschiedlich bemessen sein, werden aber bevorzugt im Wesentlichen gleich lang gewählt.

Diese Übergangsbereiche in den angegebenen Abmessungen und mit der sanften Überführung der Querschnittskontur sind es, die, wie sich überraschend gezeigt hat und in Simulationen und realen Versuchen bestätigt werden konnte, eine deutliche Erhöhung der Widerstandsfähigkeit gegenüber Querkräften erbringen. Versuche zeigten eine Erhöhung gegenüber Vergleichsproben ohne die erfindungsgemäßen Übergangsbereiche in der erfindungsgemäßen Dimension um wenigstens 50%.

Die in Fig. 2 gezeigte Querschnittsform ist aber nicht die einzig mögliche, die der mittlere Abschnitt 4 annehmen kann. Andere Formen sind denkbar, wobei (auch mit einer Querschnittsform gemäß der Darstellung in Fig. 2) spiralförmig gewundene, aber auch gerade in Längsrichtung des thermischen Auslöseelements 1 verlaufende Strukturen im mittleren Abschnitt 4 denkbar sind.

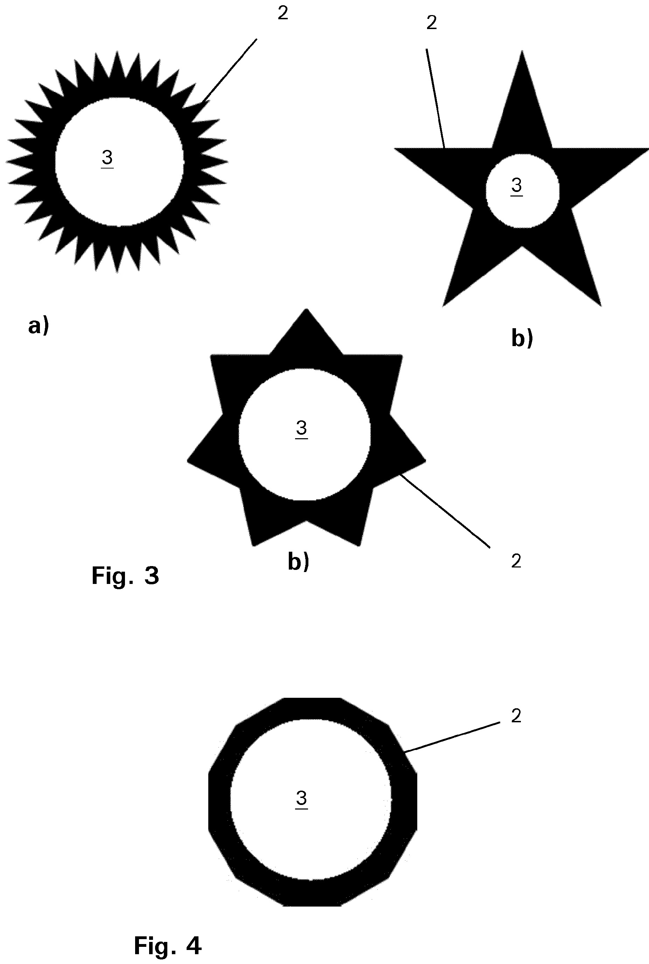

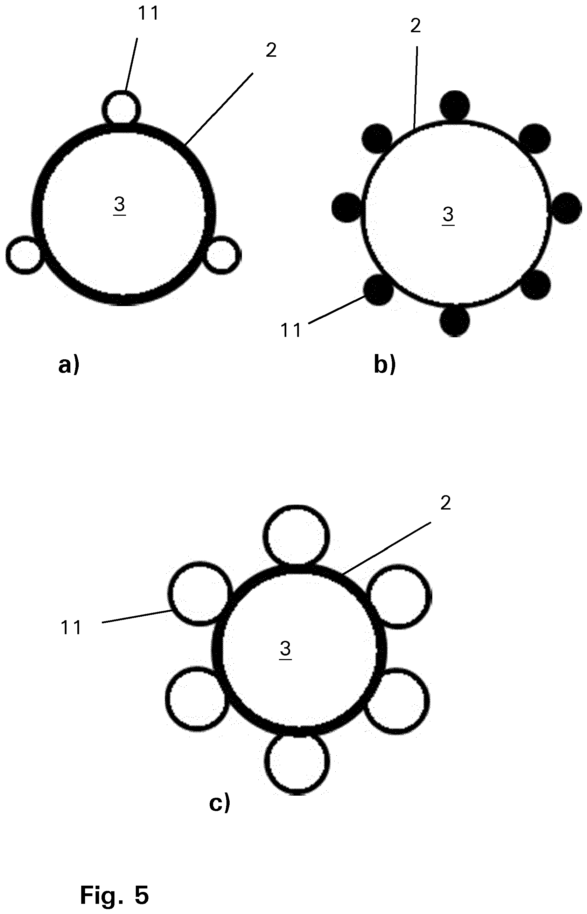

Weitere mögliche Querschnittsformen des mittleren Abschnitts sind in den Figuren 3, 4 und 5 in jeweils unterschiedlicher Ausprägung in den Darstellungen a-c gemäß Fig. 3 bzw. 5 und in den Darstellungen der Fig. 4 gezeigt. Wesentlich ist aber auch hier, dass die Übergangsbereiche 7, 8 einen sanften Konturübergang besorgen und in ihren Längen L₁ und L₂ den o.g. Abmessungen genügen.

In Fig. 3 ist eine Gruppe möglicher Querschnittsformen zusammengefasst, bei denen die Außenwand 2 im mittleren Abschnitt 4 an ihrer Außenseite im Querschnitt eine sternförmige Außenkontur aufweist. Dargestellt sind hier sternförmige Außenkonturen mit regelmäßig angeordneten und ausgebildeten Zacken, jeweils unterschiedlicher Anzahl derselben. An der Innenseite, die dem Hohlraum 3 zugewandt ist, hat in den hier gezeigten Ausführungsbeispielen in dem mittleren Abschnitt 4 die Außenwand 2 nach wie vor einen kreisförmigen Querschnitt.

Im Unterschied zur Fallgruppe mit sternförmigem Querschnitt des mittleren Abschnitts, ist in Fig. 4 ein Fall gezeigt, in denen die Querschnittskontur im mittleren Abschnitt die Form eines regelmäßigen Vielecks, hier eines regelmäßigen Zwölfecks, aufweist. Auch hier ist in dem mittleren Abschnitt 4 die Außenkontur an der Innenseite der Außenwand, also derjenigen Seite, die dem Hohlraum 3 zugewandt ist, weiterhin kreisförmig gebildet.

Andere Möglichkeiten der Ausgestaltung eines von der Kreisform abweichenden Querschnittes im mittleren Abschnitt 4 sind in Fig. 5 dargestellt. Dort sind - wiederum in verschiedenen Möglichkeiten der Umsetzung - solche Fälle gezeigt, in denen ausgehend von einem sowohl auf der Außenseite als auch auf der Innenseite zunächst kreisförmigen Verlauf bzw. einer kreisförmigen Außenkontur der Außenwand 2 in ihrem Querschnitt im mittleren Abschnitt Ausbuchtungen, in den Figuren mit 11 bezeichnet, vorgesehen sind, die zu einer Abweichung von der Kreisform dieser Kontur führen. Diese Ausbuchtungen 11 können insbesondere hervorgerufen sein durch in der axialen Richtung des mittleren Abschnittes 4 und damit auch des thermischen Auslöseelementes 1 verlaufende säulen- bzw. strebenartige Strukturen.

Gut zu erkennen ist in allen Abbildungen gemäß der Figuren 2 bis 5, dass hier eine bewusst von einer Kreisform bzw. Ovalform abweichende Außenkontur der Außenwand 2 im mittleren Abschnitt 4 des thermischen Auslöseelementes 1 gewählt worden ist. Diese bewusst gewählte abweichende Form führt im Zusammenwirken mit den wie oben beschrieben in axialer Richtung ausreichend lang bemessenen Übergangsbereichen 7 bzw. 8, in denen die Querschnittsform des mittleren Abschnitts 4 zu der Kreisform des Querschnitts in dem jeweiligen Endabschnitt 5 bzw. 6 überführt wird, zu einer deutlich verbesserten Widerstandsfähigkeit des thermischen Auslöseelements 1 gegenüber Querkräften. Insbesondere bleibt dabei, wesentlich ermöglicht durch die die - zumindest in Abschnitten - beibehaltene dünne Wandstärke und auch gefördert durch die vergrößerte Oberfläche, das Auslöse- bzw. Reaktionsverhalten des thermischen Auslöseelementes 1 unverändert gut, können insbesondere weiterhin verkürzte Auslöse- bzw. Reaktionszeiten erreicht werden.

### Bezugszeichenliste

- 1: thermisches Auslöseelement
- 2: Außenwand
- 3: Hohlraum
- 4: mittlerer Abschnitt
- 5: Endabschnitt
- 6: Endabschnitt
- 7: Übergangsbereich
- 8: Übergangsbereich
- 9: Rippe
- 10: Tal
- 11: Ausbuchtung

- d: Wandstärke
- L₁: axiale Länge
- L₂: axiale Länge
- r: Radius
- R: Radius

## Patentansprüche

1. Thermisches Auslöseelement mit einem eine aus einem Berstmaterial gebildete Außenwand (2) aufweisenden Gefäßkörper und einem von der Außenwand (2) umschlossenen, im Innern des Gefäßkörpers liegenden Hohlraum (3), in welchem eine Auslöseflüssigkeit eingeschlossen ist, wobei der Gefäßkörper entlang einer axialen Richtung ausgedehnt gebildet ist mit einem in der axialen Richtung erstreckten, rohrförmigen mittleren Abschnitt (4) und zwei an den jeweiligen axialen Enden gelegenen Endabschnitten (5, 6), in denen der Hohlraum (3) kappenartig verschlossen ist, wobei der Gefäßkörper in dem rohrförmigen mittleren Abschnitt (4) in einer quer, insbesondere senkrecht, zu der axialen Richtung genommenen Schnittebene eine Außenkontur der Außenwand (2) aufweist, die von einer kreisförmigen oder ovalen Kontur abweicht,
**dadurch gekennzeichnet, dass**
die Endabschnitte (3) in dem mittleren Abschnitt (4) zugewandten Bereichen jeweils in einer quer, insbesondere senkrecht, zu der axialen Richtung genommenen Schnittebene eine kreisförmige oder eine ovale Außenkontur der Außenwand (2) aufweisen, wobei zwischen dem mittleren Abschnitt (4) und den Endabschnitten (5, 6) Übergangsbereiche (7, 8) vorgesehen sind, in denen in einer quer, insbesondere senkrecht, zu der axialen Richtung genommenen Schnittebene die Außenkontur der Außenwand (2) von der von einer kreisrunden oder ovalen Form abweichenden Form des mittleren Abschnitts in die kreisrunde oder ovale Form des jeweiligen Endabschnitts übergeht, wobei die Übergangsbereiche (7, 8) eine Längserstreckung (L₁, L₂) in der axialen Richtung von mindestens 1,5 mm aufweisen.

2. Thermisches Auslöseelement nach Anspruch 1, **dadurch gekennzeichnet, dass** die Übergangsbereiche eine Längserstreckung (L₁, L₂) in der axialen Richtung von 1,5 bis 3,0 mm aufweisen

3. Thermisches Auslöseelement nach Anspruch 2, **dadurch gekennzeichnet, dass** die Längserstreckung (L₁, L₂) der Übergangsbereiche (7, 8) in der axialen Richtung von 2,0 bis 2,5 mm, insbesondere von 2,0 bis 2,2 mm beträgt.

4. Thermisches Auslöseelement nach einem der vorhergehenden Ansprüche, **dadurch gekennzeichnet, dass** der Gefäßkörper in dem rohrförmigen mittleren Abschnitt (4) in der quer, insbesondere senkrecht, zu der axialen Richtung genommenen Schnittebene eine Außenkontur der Außenwand (2) von polygonaler Form aufweist.

5. Thermisches Auslöseelement nach Anspruch 4, **dadurch gekennzeichnet, dass** die polygonale Form ein regelmäßiges Vieleck ist.

6. Thermisches Auslöseelement nach Anspruch 4, **dadurch gekennzeichnet, dass** die polygonale Form eine Sternform ist.

7. Thermisches Auslöseelement nach einem der vorhergehenden Ansprüche, **dadurch gekennzeichnet, dass** der Gefäßkörper in dem rohrförmigen mittleren Abschnitt (4) in der quer, insbesondere senkrecht, zu der axialen Richtung genommenen Schnittebene eine Außenkontur der Außenwand (2) von der Form einer Kreis- oder Ovalform mit daran angeformten Rippen (9) oder angesetzten Ausbuchtungen (11) aufweist.

8. Thermisches Auslöseelement nach Anspruch 7, **dadurch gekennzeichnet, dass** der Gefäßkörper jedenfalls in seinem mittleren, rohrförmigen Abschnitt (4) auf einer Außenseite der Außenwand (2) aufgebrachte, mit dieser fest verbundene Verstärkungsbereiche aufweist.

9. Thermisches Auslöseelement nach Anspruch 8, **dadurch gekennzeichnet, dass**, die Verstärkungsbereiche säulenartig gebildet sind und in axialer Richtung verlaufen.

10. Thermisches Auslöseelement nach einem der vorhergehenden Ansprüche, **dadurch gekennzeichnet, dass** in dem mittleren Abschnitt der von der Kreis- oder Ovalform abweichende Querschnitt für in axialer Richtung parallel verschobene Schnittebenen rotiert.

11. Thermisches Auslöseelement nach einem der vorhergehenden Ansprüche, **dadurch gekennzeichnet, dass** seine über die gesamte axiale Erstreckung bestimmte Länge von 12 mm bis 50 mm beträgt.

12. Thermisches Auslöseelement nach einem der vorhergehenden Ansprüche, **dadurch gekennzeichnet, dass** das Berstmaterial Glas ist.

13. Thermisches Auslöseelement nach einem der vorhergehenden Ansprüche, **dadurch gekennzeichnet, dass** der Gefäßkörper jedenfalls in dem mittleren Abschnitt (4) und dort zumindest in ausgewählten Bereichen eine Wandstärke (d) von ≤ 0,5 mm aufweist.

14. Thermisches Auslöseelement nach einem der vorhergehenden Ansprüche, **dadurch gekennzeichnet, dass** in dem Hohlraum (3) zusätzlich zu der Auslöseflüssigkeit eine Gasblase angeordnet ist.

15. Thermisches Auslöseelement nach einem der vorhergehenden Ansprüche, **dadurch gekennzeichnet, dass** es aus einem rohrförmigen Ausgangswerkstück aus dem Berstmaterial durch einseitiges Verschließen des Ausgangswerkstückes an einem ersten Stirnende zum Erhalten eines Halbzeuges, Befüllen des in dem Halbzeug befindlichen Hohlraumes (3) mit der Auslöseflüssigkeit und Verschließen des Halbzeuges an dem dem ersten Stirnende gegenüberliegenden zweiten Stirnende gebildet ist, wobei das rohrförmige Ausgangswerkstück in einer quer, insbesondere senkrecht, zu einer axialen Richtung des Ausgangswerkstückes genommenen Schnittebene eine Außenkontur seiner Außenwand (2) aufweist, die von einer kreisförmigen oder ovalen Kontur abweicht.

## Claims

1. A thermal release element comprising a vessel body having an outer wall (2) formed of a bursting material and a cavity (3) enclosed by the outer wall (2) and located inside the vessel body, in which cavity a release liquid is enclosed, the vessel body being formed expanded along an axial direction with one tubular central section (4), extending in the axial direction, and two end sections (5, 6) located at the respective axial ends, in which the cavity (3) is closed in the form of a cap, wherein the vessel body in the tubular central section {4) has an outer contour of the outer wall (2) which deviates from a circular or oval contour in a cut plane taken transversely, in particular perpendicularly, to the axial direction, **characterised in that** the end sections (3) in regions facing the central section (4) each have a circular or an oval outer contour of the outer wall (2) in a cut plane taken transversely, in particular perpendicularly, to the axial direction, between the central section (4) and the end sections {5, 6), transition regions (7, 8) being provided in which, in a transverse direction, the outer wall (2) has a cross-sectional area (3) which is perpendicular to the axial direction of the cut plane (4), in particular perpendicular, to the axial direction, the outer contour of the outer wall (2) changes from the shape of the middle section, which deviates from a circular or oval shape, to the circular or oval shape of the respective end section, the transition regions (7, 8) extending longitudinally (L₁, L₂) in the axial direction of at least 1.5 mm.

2. A thermal release element according to claim 1, **characterised in that** the transition regions have a longitudinal extension (L₁, L₂) in the axial direction of from 1.5 to 3 mm.

3. A thermal release element according to claim 2, **characterised in that** the longitudinal extent (L₁, L₂) of the transition regions (7, 8) in the axial direction is from 2.0 to 2.5 mm, in particular from 2.0 to 2.2 mm.

4. A thermal release element according to one of the preceding claims, **characterised in that** the vessel body in the tubular central section (4) in the section plane taken transversely, in particular perpendicularly, to the axial direction has an outer contour of the outer wall (2) of polygonal shape.

5. A thermal release element according to claim 4, **characterised in that** the polygonal shape is a regular polygon.

6. A thermal release element according to claim 4, **characterised in that** the polygonal shape is in the form of a star.

7. A thermal release element according to one of the preceding claims, **characterised in that** the vessel body in the tubular central section (4) has, in the section plane taken transversely, in particular perpendicularly, to the axial direction, an outer contour of the outer wall (2) in the form of a circular or oval shape with ribs (9) bulges (11) integrally formed or applied thereon.

8. A thermal release element according to Claim 7, **characterised in that** the vessel body, at least in its central, tubular section (4), has reinforcement regions which are applied to an outer side of the outer wall (2) and are firmly connected thereto.

9. A thermal release element according to claim 8, **characterised in that** the reinforcing regions are in the form of a column and run in the axial direction.

10. A thermal release element according to one of the preceding claims, **characterised in that** in the central section the cross-section deviating from the circular or oval shape rotates for cutting planes displaced parallel in the axial direction.

11. A thermal release element according to one of the preceding claims, **characterised in that** its length determined over the entire axial extension is from 12 mm to 50 mm.

12. A thermal release element according to one of the preceding claims, **characterised in that** the bursting material is glass.

13. A thermal release element according to one of the preceding claims, **characterised in that** the vessel body has a wall thickness (d) of < 0.5 mm at least in the middle section (4) and there at least in selected regions, in any case.

14. A thermal release element according to one of the preceding claims, **characterised in that** a gas bubble is arranged in the cavity (3) in addition to the release liquid.

15. A thermal release element according to one of the preceding claims, **characterised in that** it is formed from a tubular starting workpiece of the bursting material by closing the starting workpiece on one side at a first end for obtaining a semi-finished product, filling the cavity (3) located in the semi-finished product with the release liquid and closing the semi-finished product at the second end opposite the first end, the tubular starting workpiece having, in a sectional plane taken transversely, in particular perpendicularly, to an axial direction of the starting workpiece, an outer contour of its outer wall (2) which deviates from a circular or oval contour.

## Revendications

1. Elément de libération thermique comprenant un corps de récipient ayant une paroi extérieure (2) formée d'un matériau d'éclatement et une cavité (3) entourée par la paroi extérieure (2) et située à l'intérieur du corps de récipient, cavité dans laquelle un liquide de libération est enfermé, le corps de récipient étant formé expansé dans une direction axiale avec une section centrale tubulaire (4), s'étendant dans la direction axiale, et deux sections d'extrémité (5, 6) situées aux extrémités axiales respectives, dans lequel la cavité (3) est fermée sous la forme d'un capuchon, dans lequel le corps du récipient dans la section centrale tubulaire {4) présente un contour extérieur de la paroi extérieure (2) qui s'écarte d'un contour circulaire ou ovale dans un plan de coupe pris perpendiculairement à la direction axiale, **caractérisé en ce que** les sections d'extrémité (3) dans des régions faisant face à la section centrale (4) présentent chacune un contour extérieur circulaire ou ovale de la paroi extérieure (2) dans un plan de coupe pris transversalement, notamment perpendiculairement, à la direction axiale, entre la section centrale (4) et les sections d'extrémité {5, 6), dans lequel sont prévues des régions de transition (7, 8), dans une direction transversale, la paroi extérieure (2) présente une surface de section transversale (3) qui est perpendiculaire à la direction axiale du plan de coupe (4), en particulier perpendiculaire à la direction axiale, le contour extérieur de la paroi extérieure (2) change de forme, de la section centrale, qui diffère d'une forme circulaire ou ovale, à la forme circulaire ou ovale de la section terminale respective, les régions de transition (7, 8) s'étendant dans le sens longitudinal (L₁, L₂), en direction axiale, dans au moins 1.5 mm.

2. Elément de libération thermique selon la revendication 1, **caractérisé en ce que** les zones de transition présentent une extension longitudinale (L₁, L₂) dans la direction axiale de 1,5 à 3 mm.

3. Elément de déclenchement thermique selon la revendication 2, **caractérisé en ce que** l'étendue longitudinale (L₁, L₂) des zones de transition (7, 8) dans la direction axiale est de 2,0 à 2,5 mm, en particulier de 2,0 à 2,2 mm.

4. Elément de libération thermique selon l'une des revendications précédentes, **caractérisé en ce que** le corps du récipient dans la section centrale tubulaire (4) dans le plan de la section prise transversalement, en particulier perpendiculairement, à la direction axiale, présente un contour extérieur de la paroi extérieure (2) de forme polygonale.

5. Elément de libération thermique selon la revendication 4, **caractérisé en ce que** la forme polygonale est un polygone régulier.

6. Elément de libération thermique selon la revendication 4, **caractérisé en ce que** la forme polygonale est en forme d'étoile.

7. Elément de libération thermique selon l'une des revendications précédentes, **caractérisé en ce que** le corps du récipient dans la section centrale tubulaire (4) présente, dans le plan de section pris transversalement, en particulier perpendiculairement à la direction axiale, un contour extérieur de la paroi extérieure (2) en forme de cercle ou d'ovale avec des nervures (9) formées ou appliquées d'une seule pièce (11) sur celles-ci.

8. Elément de libération thermique selon la revendication 7, **caractérisé en ce que** le corps du réservoir, au moins dans sa section tubulaire centrale (4), présente des zones de renforcement qui sont appliquées sur un côté extérieur de la paroi extérieure (2) et qui y sont fermement reliées.

9. Elément de libération thermique selon la revendication 8, **caractérisé en ce que** les zones de renforcement sont en forme de colonne et s'étendent dans la direction axiale.

10. Elément de libération thermique selon l'une des revendications précédentes, **caractérisé en ce que**, dans la section centrale, la section transversale s'écartant de la forme circulaire ou ovale tourne pour des plans de coupe déplacés parallèlement dans la direction axiale.

11. Elément de libération thermique selon l'une des revendications précédentes, **caractérisé en ce que** sa longueur déterminée sur toute l'étendue axiale est de 12 mm à 50 mm.

12. Elément de libération thermique selon l'une des revendications précédentes, **caractérisé en ce que** le matériau d'éclatement est le verre.

13. Elément de libération thermique selon l'une des revendications précédentes, **caractérisé en ce que** le corps de la cuve présente une épaisseur de paroi (d) inférieure à 0,5 mm au moins dans la partie médiane (4) et au moins dans certaines zones, en tout cas.

14. Elément de libération thermique selon l'une des revendications précédentes, **caractérisé en ce qu'**une bulle de gaz est disposée dans la cavité (3) en plus du liquide de libération.

15. Elément de libération thermique selon l'une des revendications précédentes, **caractérisé en ce qu'**il est formé à partir d'une pièce de départ tubulaire du matériau d'éclatement en fermant la pièce de départ d'un côté sur une première extrémité pour obtenir un produit semi-fini, remplissage de la cavité (3) située dans le produit semi-fini avec le liquide de démoulage et fermeture du produit semi-fini à la deuxième extrémité opposée à la première extrémité, la pièce tubulaire de départ ayant, dans un plan en coupe pris transversalement, notamment perpendiculairement, à une direction axiale de la pièce de départ, un contour extérieur de sa paroi extérieure (2) qui dévie d'un contour circulaire ou ovale.
